# EUROPÄISCHE PATENTSCHRIFT

(11) **EP 1 409 896 B1**
(45) Veröffentlichungstag und Bekanntmachung des Hinweises auf die Patenterteilung: **20.06.2007**
(21) Anmeldenummer: 00987485.0
(22) Anmeldetag: 19.12.2000
(51) Int. Cl.: F16J 9/20

(54) **ÖLABSTREIFKOLBENRING SOWIE VERFAHREN ZUR HERSTELLUNG EINES ÖLABSTREIFKOLBENRINGES**
OIL-SCRAPER PISTON RING AND A METHOD FOR PRODUCING AN OIL-SCRAPER PISTON RING
SEGMENT DE PISTON RACLEUR D'HUILE ET PROCEDE DE PRODUCTION D'UN SEGMENT DE PISTON RACLEUR D'HUILE

(30) Priorität: 20.01.2000 DE 10002282
(43) Veröffentlichungstag der Anmeldung: 21.04.2004
(73) Patentinhaber: Federal-Mogul Burscheid GmbH, 51399 Burscheid (DE)
(72) Erfinder: PREYER, Karlfried, 42929 Wermelskirchen (DE)
(86) Internationale Anmeldenummer: PCT/EP2000/013398
(87) Internationale Veröffentlichungsnummer: WO 2001/053727

(56) Entgegenhaltungen:
- EP-A- 0 924 319
- DE-A- 4 236 641
- US-A- 5 901 963

## Beschreibung

Die Erfindung betrifft ein Verfahren zur Herstellung eines Ölabstreifkolbenringes.

Es ist allgemein bekannt, unbeschichtete Ölabstreifkolbenringe mit konischen Laufstegen auszubilden. Problematisch bei Beschichtungen dieser konischen Laufflächen war bisher, daß die Anläppung über den gesamten Ringumfang nicht gleichmäßig und auf beiden Laufstegen mit gleichen radialen Abmessungen oder definiert nur im oberen Bereich vorgesehen werden konnte, damit auch eine Reduzierung des Ölverbrauchs im Einlaufverhalten gegeben ist.

Der DE-A 42 36 641 ist ein Ölabstreifkolbenring für Verbrennungsmotoren zu entnehmen, der mit einem Federring zusammenwirkt, durch welchen seine beiden Laufstege an die korrespondierende Zylinderwand angedrückt werden. Die Laufstege sind hierbei konisch ausgebildet und mit einer verschleißfähigen Chromschicht überzogen. Nachteilig ist hier festzustellen, daß bei Anordnung von zwei Laufstegen und Überziehen derselben mit einer Verschleißschutzschicht es sich bei der anschließenden Läppung nicht vermeiden läßt, daß im Bereich der Laufstege unterschiedliche Laufflächen bezüglich Höhe und radialer Ausdehnung gebildet werden und sich somit ein unterschiedliches Laufverhalten des Ölabstreifkolbenringes im Betriebszustand einstellen wird. Daraus resultieren neben einem unterschiedlichen Verschleißverhalten der beiden Laufstege bzw. der zugehörigen Laufflächen auch ein nicht optimaler Ölverbrauch, insbesondere im Einlaufverhalten des Ölabstreifkolbenringes.

Der Erfindung liegt die Aufgabe zugrunde, ein Verfahren zur Herstellung eines Ölabstreifkolbenringes zu konzipieren, durch welches sichergestellt wird, daß der bzw. die Laufstege so vorgesehen ist bzw. sind, daß beide Laufstege mit im wesentlichen gleichen Laufflächenhöhen und radialen Erstreckungen gegenüber der korrespondierenden Zylinderwand vorgesehen sind. Des weiteren soll ein Ölabstreifkolbenring bereitgestellt werden, der insbesondere im Einlaufzustand einen minimierten Ölverbrauch der jeweiligen Brennkraftmaschine mit sich bringt und gleichzeitig eine lange Standzeit beinhaltet.

Diese Aufgabe wird gelöst durch ein Verfahren zur Herstellung eines Ölabstreifkolbenringes, der mindestens einen mit einem verschleißfesten Überzug versehenen Laufsteg beinhaltet, indem vor dem Aufbringen des verschleißfesten Überzuges laufstegseitig ein Profil erzeugt wird, das im , den die äußere Umfangsfläche und zugleich Lauffläche des Laufsteges (2,3) bildenden konischen Bereich (4), eine aus dieser konischen Ringebene radial nach außen hervorstehende radiale Erhebung (6) aufweist, daß zumindest dieses Profil mit dem verschleißfesten Überzug versehen wird, und daß zur Einstellung eines über den Ringumfang im wesentlichen gleichmäßigen Laufflächenprofiles, zumindest im Bereich der radialen Erhebung, ein vorgebbarer Materialabtrag des Überzuges vorgenommen wird.

Vorteilhafte Weiterbildungen des Erfindungsgegenstandes sind den zugehörigen Unteransprüchen zu entnehmen.

Die Aufgabe wird darüber hinaus gelöst durch einen Ölabstreifkolbenring mit mindestens einem mit einem verschleißfesten Überzug versehenen konischen Laufsteg, der dadurch gekennzeichnet ist, daß im, den die äußere Umfangsfläche und zugleich Lauffläche des Laufsteges (, 3) bildenden Bereich der konischen Ringebene des Laufsteges eine mit dem verschleißfesten Überzug versehene radiale Erhebung vorgebbarer Höhe vorgesehen ist.

Vorteilhafte Weiterbildungen des erfindungsgemäßen Ölabstreifkolbenringes sind den zugehörigen Unteransprüchen zu entnehmen.

Vor der Aufbringung der Verschleißschutzschicht, insbesondere der Chromschicht wird somit ein derartiges Profil im Laufflächenbereich gebildet, daß aus der konischen Ebene eine umlaufende, vorzugsweise zylindrisch ausgebildete Erhebung, vorgegebener Höhe gegeben ist. Im Anschluß an das Aufbringen der Verschleißschutzschicht, insbesondere der Chromschicht, wird vorzugsweise durch Rundläppen der Laufstege ein Teil der Erhebung wieder abgearbeitet, wobei dies ausschließlich die Verschleißschutzschicht betrifft. Der fertige Ring hat, insbesondere nach dem Fertigungsvorgang des Profilschleifens der Laufstegflanken, eine definierte zylindrische Restfläche mit radialer Erhöhung.

Durch das erfindungsgemäße Herstellverfahren wird ein Ölabstreifkolbenring konzipiert, der über den Umfang gesehen, eine gleichmäßig hohe Lauffläche im Bereich des bzw. der Laufstege beinhaltet, und bei welchem - bei Verwendung von Ölabstreifkolbenringen mit zwei oder mehreren Laufstegen - selbige mit gleicher radialer Erstreckung ausgebildet sind und demzufolge die Laufflächen aller Laufstege mit im wesentlichen gleicher Kraft an die korrespondierende Zylinderwand angedrückt werden. Diese Maßnahme führt zu einem insbesondere in der Einlaufphase, reduzierten Ölverbrauch der jeweiligen Brennkraftmaschine.

Gegenüber dem bekannten Stand der Technik wird somit ein funktionsfähiger Ölabstreifkolbenring erzeugt, der neben einem optimierten Einlaufverhalten auch eine lange Standzeit mit sich bringt. Der Erfindungsgegenstand ist anhand eines Ausführungsbeispiels dargestellt und wird wie folgt beschrieben. Es zeigen:
- Figur 1: schematische Darstellung des erfindungsgemäßen Ölabstreifkolbenringes
- Figuren 2 bis 4: unterschiedliche Fertigungsschritte des erfindungsgemäßen Ölabstreifkolbenringes gemäß Figur 1.

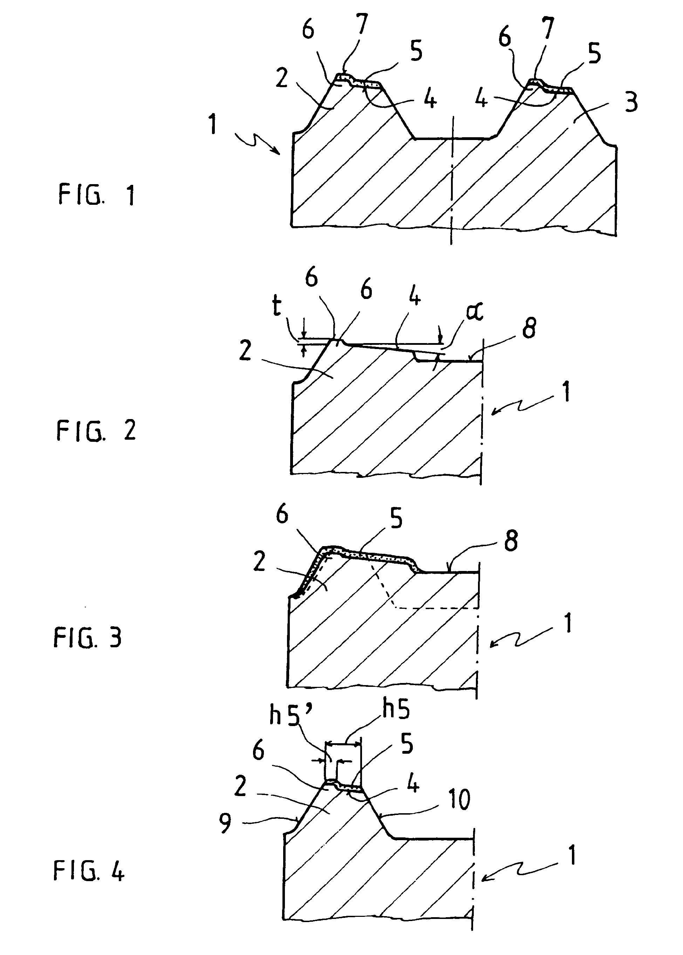

Figur 1 zeigt eine schematische Darstellung des erfindungsgemäßen Ölabstreifkolbenringes 1, der mit zwei Laufstegen 2,3 versehen ist. Die äußere Umfangsfläche 4 des nicht mit einer Verschleißschutzschicht versehenen Ölabstreifkolbenringes 1 ist konisch ausgebildet. Vor dem Aufbringen der in diesem Beispiel aus Chrom gebildeten Verschleißschutzschicht 5 werden die Laufstege 2,3 des Ölabstreiflcolbenringes mit radial nach außen sich erstreckenden umlaufenden Erhebungen 6 versehen, so daß auch die Chromschicht 5 im Anschluß an den Beschichtungsvorgang in diesem Bereich 6 vorgesehen ist. Die Erhebungen 6 sind hierbei zylindrisch ausgebildet, was auch die Verschleißschutzschicht 5 in diesem Bereich betrifft. Durch einen mechanischen Bearbeitungsvorgang werden in Umfangsrichtung gleichmäßig hohe Laufflächen 7 im Bereich dieser radialen Erhebungen 6 gebildet.

Die Figuren 2 bis 4 zeigen unterschiedliche Fertigungszustände des erfindungsgemäßen Ölabstreifkolbenringes 1 gemäß Figur 1, wobei lediglich der Laufsteg 2 daegestellt ist. Zunächst wird im Bereich des zukünftigen Laufsteges 2 eine konische Fläche 4 mit vorgegebener Neigung α erzeugt. Aus dieser konischen Ebene heraus erstreckt sich radial nach außen eine Erhebung 6 mit vorgebbarer radialer Höhe t, deren Außenumfangsfläche 6' zylindrisch ausgebildet ist. Die nicht weiter erkennbaren Ölkanäle sind im zylindrisch verlaufenden Bereich 8 des Ölabstreifkolbenringes 1 vorgesehen. Die Konturgebung gemäß Figur 2 soll in diesem Beispiel durch mechanische Formgebung herbeigeführt werden.

Figur 3 zeigt den Zustand nach Aufbringung der Verschleißschutzschicht 5, die sich im wesentlichen über den gesamten zukünftigen Laufsteg 2 erstreckt und auch die Erhebung 6 überdeckt. Die spätere Kontur des Laufsteges 2 sowie des zylindrischen Bereiches 8 ist gestrichelt angedeutet. Nach Aufbringen der in diesem Beispiel aus Chrom bestehenden Verschleißschutzschicht 5 wird durch Rundläppen des bzw. der Laufstege ein Teil der Verschleißschutzschicht 5 abgearbeitet.

Figur 4 zeigt die Kontur des fertigen Ölabstreiflcolbenringes 1 mit dem Profil des Laufsteges 2, des konischen Bereiches 4 sowie der radial nach außen weisenden Erhebung 6 in Verbindung mit der Verschleißschutzschicht 5. Der fertige Ölabstreifkolbenring 1 hat nach dem Profilschleifen der Laufstegflanken 9, 10 eine definierte zylindrische Restfläche h5' im Bereich der radialen Erhebung 6. Die gesamte Laufsteghöhe ist hierbei mit h5 bezeichnet.

## Patentansprüche

1. Verfahren zur Herstellung eines Ölabstreifkolbenringes (1), der mindestens einen mit einem verschleißfesten Überzug (5) versehenen Laufsteg (2,3) beinhaltet, indem vor dem Aufbringen des verschleißfesten Überzuges (5) laufstegseitig ein Profil erzeugt wird, das im, den die äußere Umfangsfläche und zugleich Lauffläche des Laufsteges (2, 3) bildenden konischen Bereich (4), eine aus dieser konischen Ringebene radial nach außen hervorstehende radiale Erhebung (6) aufweist, daß zumindest dieses Profil mit dem verschleißfesten Überzug (5) versehen wird, und daß zur Einstellung eines über den Ringumfang im wesentlichen gleichmäßigen Laufflächenprofiles zumindest im Bereich der radialen Erhebung (6) ein vorgebbarer Materialabtrag des Überzuges (5) vorgenommen wird.

2. Verfahren nach Anspruch 1, **dadurch gekennzeichnet, daß** das Profil dergestalt erzeugt wird, daß die radiale Erhebung (6) mit zylindrischem Außenumfang (6') ausgebildet wird.

3. Verfahren nach Anspruch 1 oder 2, **dadurch gekennzeichnet, daß** zumindest der Bereich des Laufsteges (2,3) verchromt wird.

4. Verfahren nach einem der Ansprüche 1 bis 3, **dadurch gekennzeichnet, daß** nach dem Aufbringen des verschleißfesten Überzuges (5) durch Rundläppen des Laufsteges (2,3) der Materialabtrag herbeigeführt wird.

5. Verfahren nach einem der Ansprüche 1 bis 4, **dadurch gekennzeichnet, daß** zur Einstellung des geforderten Laufstegprofiles die äußere Umfangsfläche des Ölabstreifkolbenringes (1) zumindest partiell profilgeschliffen wird.

6. Ölabstreifkolbenring hergestellt nach dem Verfhren gemäß Patentanspruch 1 mit mindestens einem mit einem verschleißfesten Überzug (5) versehenen konischen Laufsteg (2,3), **dadurch gekennzeichnet, daß** im, den die äußere Umfangsfläche und zugleich Lauffläche des Laufsteges (2, 3) bildenden Bereich der konischen Ringebene des Laufsteges (2,3), eine mit dem verschleißfesten Überzug (5) versehene radiale Erhebung (6) vorgebbarer radialer Höhe (t) und Breite (h5') vorgesehen ist.

7. Ölabstreifkolbenring nach Anspruch 6, **dadurch gekennzeichnet, daß** die Erhebung (6) mit zylindrischem Außenumfang (6') vorgesehen ist.

8. Ölabstreifkolbenring nach Anspruch 6 oder 7, **dadurch gekennzeichnet, daß** der verschleißfeste Überzug (5) aus Chrom besteht.

9. Ölabstreifkolbenring nach einem der Ansprüche 6 bis 8, **dadurch gekennzeichnet, daß** der verschleißfeste Überzug (5) im Bereich der Erhebung (6) zur Einstellung einer definierten zylindrischen Lauffläche (7) angeläppt ist.

## Claims

1. Method for producing an oil-scraper piston ring (1) which comprises at least one running web (2, 3) which is provided with a wear-resistant coating (5) in that a profile is produced on the running web side before applying the wear-resistant coating (5), which profile has, in the conical region (4) which forms the outer circumferential face and at the same time the running face of the running web (2, 3), a radial elevation (6) projecting radially outwards out of this conical ring plane, that at least this profile is provided with the wear-resistant coating (5), and that a predeterminable amount of material of the coating (5) is removed in order to obtain a running face profile which is substantially uniform over the ring circumference, at least in the region of the radial elevation (6).

2. Method according to claim 1, **characterised in that** the profile is produced such that the radial elevation (6) is formed with a cylindrical outer circumference (6').

3. Method according to claim 1 or 2, **characterised in that** at least the region of the running web (2, 3) is chromium-plated.

4. Method according to any one of claims 1 to 3, **characterised in that** the material is removed through cylindrical lapping of the running web (2, 3) following the application of the wear-resistant coating (5).

5. Method according to any one of claims 1 to 4, **characterised in that** the outer circumferential face of the oil-scraper piston ring (1) is at least partially profile-ground in order to obtain the required running web profile.

6. Oil-scraper piston ring produced according to the method according to claim 1 with at least one conical running web (2, 3) provided with a wear-resistant coating (5), **characterised in that** a radial elevation (6) of a predeterminable radial height (t) and width (h5') which is provided with the wear-resistant coating (5) is provided in the region of the conical ring plane of the running web (2, 3) which forms the outer circumferential face and at the same time the running face of the running web (2, 3).

7. Oil-scraper piston ring according to claim 6, **characterised in that** the elevation (6) is provided with a cylindrical outer circumference (6').

8. Oil-scraper piston ring according to claim 6 or 7, **characterised in that** the wear-resistant coating (5) consists of chromium.

9. Oil-scraper piston ring according to any one of claims 6 to 8, **characterised in that** the wear-resistant coating (5) is lapped in the region of the elevation (6) in order to obtain a defined cylindrical running face (7).

## Revendications

1. Procédé de fabrication d'un segment de piston racleur d'huile (1) comprenant au moins une nervure de contact (2, 3) pourvue d'un revêtement résistant à l'usure (5), par production d'un profil de nervure avant l'application du revêtement résistant à l'usure (5), ledit profil présentant, dans la zone conique (4) formant la surface de contour extérieure et simultanément la surface de contact de la nervure (2, 3), une proéminence (6) radiale faisant radialement saillie vers l'extérieur de ce plan de segment conique, **caractérisé en ce qu'**au moins ce profil est pourvu du revêtement résistant à l'usure (5), et **en ce que**, pour l'ajustement d'un profil de surface de contact sensiblement régulier sur le contour du segment, il est procédé à un enlèvement définissable de matière du revêtement (5) au moins dans la zone de la proéminence radiale (6).

2. Procédé selon la revendication 1, **caractérisé en ce que** le profil est produit de manière à former la proéminence radiale (6) avec un contour extérieur cylindrique (6').

3. Procédé selon la revendication 1 ou la revendication 2, **caractérisé en ce qu'**au moins la zone de la nervure de contact (2, 3) est chromée.

4. Procédé selon l'une des revendications 1 à 3, **caractérisé en ce que** l'enlèvement de matière est exécuté après application du revêtement résistant à l'usure (5) par rodage cylindrique de la nervure de contact (2, 3).

5. Procédé selon l'une des revendications 1 à 4, **caractérisé en ce que** pour l'ajustement du profil de la nervure de contact exigé, la surface de contour extérieure du segment de piston racleur d'huile (1) est au moins partiellement profilée par rectification.

6. Segment de piston racleur d'huile produit au moyen du procédé selon la revendication 1, avec au moins une nervure de contact conique (2, 3) pourvue d'un revêtement résistant à l'usure (5), **caractérisé en ce que**, dans la zone du plan de segment conique de la nervure de contact (2, 3) formant la surface de contour extérieure et simultanément la surface de contact de la nervure (2, 3), est prévue une proéminence radiale (6) pourvue du revêtement résistant à l'usure (5), de hauteur radiale (t) et de largeur (h5') définissables.

7. Segment de piston racleur d'huile selon la revendication 6, **caractérisé en ce que** la proéminence (6) est prévue avec un contour extérieur cylindrique (6').

8. Segment de piston racleur d'huile selon la revendication 6 ou la revendication 7, **caractérisé en ce que** le revêtement résistant à l'usure (5) est en chrome.

9. Segment de piston racleur d'huile selon l'une des revendications 6 à 8, **caractérisé en ce que** le revêtement résistant à l'usure (5) est rodé dans la zone de la proéminence (6) pour l'ajustement d'une surface de contact (7) cylindrique définie.
